# FASCICULE DE BREVET EUROPEEN

(11) **EP 1 647 018 B1**
(45) Date de publication et mention de la délivrance du brevet: **15.11.2006**
(21) Numéro de dépôt: 04767721.6
(22) Date de dépôt: 16.07.2004
(51) Int. Cl.: G11B 7/24

(54) **SUPPORT D'ENREGISTREMENT OPTIQUE COMPORTANT AU MOINS UNE COUCHE PHOTOSENSIBLE ET UNE COUCHE DEFORMABLE**
MIT MINDESTENS EINER LICHTEMPFINDLICHEN SCHICHT UND EINER DEFORMIERBAREN SCHICHT AUSGESTATTETES OPTISCHES DATENAUFZEICHNUNGSMEDIUM
OPTICAL DATA RECORDING MEDIUM PROVIDED WITH AT LEAST ONE PHOTOSENSITIVE LAYER AND ONE DEFORMABLE LAYER

(30) Priorité: 21.07.2003 FR 0308875
(43) Date de publication de la demande: 19.04.2006
(73) Titulaire: COMMISSARIAT A L'ENERGIE ATOMIQUE, 75752 Paris Cédex 15 (FR); MPO International, 53700 Averton (FR)
(72) Inventeur: POUPINET, Ludovic, F-38360 Sassenage (FR); HYOT, Bérangère, F-38320 Eybens (FR); CORNU, Philippe, F-53100 Mayenne (FR)
(74) Mandataire: Jouvray, Marie-Andrée
(86) Numéro de dépôt international: PCT/FR2004/001897
(87) Numéro de publication internationale: WO 2005/010876

(56) Documents cités:
- EP-A- 0 474 311
- PATENT ABSTRACTS OF JAPAN vol. 1998, no. 04, 31 mars 1998 (1998-03-31) & JP 09 320109 A (SONY CORP), 12 décembre 1997 (1997-12-12)

## Description

### Domaine technique de l'invention

L'invention concerne un support d'enregistrement optique comportant des premier et second substrats entre lesquels est disposée au moins une première couche photosensible comportant une face avant destinée à recevoir, par l'intermédiaire du second substrat, un rayonnement optique pendant des opérations d'écriture et/ou de lecture.

### État de la technique

L'enregistrement optique, par exemple sur des supports de type CD-R (disque compact enregistrable également connu sous le nom anglo-saxon «Compact Disc Recordable») et DVD-R (disque numérique polyvalent enregistrable également connu sous le nom anglo-saxon "Digital Versatile Disc Recordable »), est, le plus souvent, réalisé grâce à une couche en matériau colorant déposée sur un substrat en matière plastique et recouverte par une couche métallique réflectrice. Cependant, les technologies d'enregistrement optique irréversible dans des matériaux à colorant présentent parfois des coûts élevés, notamment par rapport au prix des colorants et au coût de la main d'oeuvre pour les étapes de manipulation des colorants.

Il a également été proposé de réaliser des supports d'enregistrement optique à l'aide de matériaux inorganiques. Les matériaux inorganiques peuvent présenter un avantage en termes de coût de production et de performances aux hautes vitesses linéaires. Il y a différentes méthodes pour écrire dans une couche de matériau inorganique. La technique irréversible la plus étudiée consiste à former des marques dans le matériau inorganique par ablation laser. La présence de la marque se traduit par une baisse locale de la réflexion d'un faisceau laser à la surface du disque. Cette baisse de la réflexion est lue avec une puissance laser plus faible.

Cependant, les essais réalisés ne correspondent pas aux spécifications d'écriture actuelles. En effet, les puissances utilisées lors des essais étaient comprises entre 40 mW et 300 mW et les dimensions des marques étaient de l'ordre de 10 µm, tandis les puissances d'écriture utilisées à présent, pour écrire sur un DVD-R, doivent être de l'ordre de 10 mW et le diamètre d'une marque doit être de l'ordre de 400 nm. Beaucoup de matériaux ont été étudiés, notamment le tellure et ses alliages avec le germanium, le sélénium et l'antimoine. Mais ils ne permettent généralement pas d'obtenir une écriture de bonne qualité ainsi que des densités de stockage d'information suffisamment élevées. De plus, le tellure est instable à température ambiante et présente des risques d'oxydation et de cristallisation. L'écriture par ablation laser peut provoquer un bourrelet autour des marques formées par le faisceau laser. Un tel bourrelet peut se traduire par du bruit sur le signal. C'est pourquoi, les technologies d'enregistrement utilisant des colorants organiques ont été, jusqu'à présent, privilégiées.

### Objet de l'invention

L'invention a pour but de réaliser un support d'enregistrement optique fonctionnant à l'aide d'au moins une couche photosensible et pouvant présenter une densité de stockage d'information élevée.

Selon l'invention, ce but est atteint par le fait qu'une première couche déformable, transparente au rayonnement optique, est disposée entre la première couche photosensible et le second substrat.

Selon un développement de l'invention, la première couche photosensible comprend un matériau inorganique.

Selon un autre développement de l'invention, le premier substrat comporte une face avant structurée.

Selon un mode de réalisation préférentiel, la première couche déformable comprend un polymère préalablement réticulé par un rayonnement lumineux, choisi, de préférence, parmi les silicones.

Selon une autre caractéristique de l'invention, la première couche déformable a une épaisseur inférieure ou égale à 200 micromètres.

Selon un autre développement de l'invention, le support comporte au moins une seconde couche photosensible semi-transparente, disposée entre la première couche déformable et le second substrat, une seconde couche déformable étant disposée entre la seconde couche photosensible et le second substrat.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une représentation schématique, en coupe, d'un premier mode de réalisation d'un support selon l'invention.
Les figures 2 et 3 représentent schématiquement, en coupe, une partie d'un support selon l'invention, respectivement avant et après écriture.
Les figures 4 et 5 sont respectivement des représentations schématiques, en coupe, de second et troisième modes de réalisation d'un support selon l'invention.

### Description de modes particuliers de réalisation.

Un support d'enregistrement optique, par exemple irréversible, est, de préférence, sous la forme d'un disque optique, mais il peut également être sous la forme d'une carte à puce. Il comporte des premier et second substrats entre lesquels est disposée au moins une couche photosensible comprenant, de préférence, un matériau inorganique. L'enregistrement du support est basé sur la déformation localisée de la couche photosensible, lorsque la face avant de celle-ci reçoit, par l'intermédiaire du second substrat, un rayonnement optique. Le second substrat est donc transparent au rayonnement optique qui est, de préférence un faisceau laser focalisé et modulé en puissance.

La couche photosensible comprend, de préférence, un matériau inorganique apte à être déformé localement sous l'action d'un rayonnement optique et elle doit assurer une réflexion suffisante et une absorption partielle de la lumière du rayonnement optique. L'énergie absorbée par la couche photosensible induit un échauffement local dans la couche qui provoque une déformation locale de celle-ci, sous forme d'une bulle ou d'un trou, notamment selon la nature du matériau inorganique la couche photosensible. Les trous ou les bulles formés constituent des marques dans la couche photosensible. Les marques de la couche photosensible étant moins réflectrices que les zones non déformées de la couche, il est alors possible de lire le support en détectant les marques formées. Ainsi, la longueur des marques et les espaces entre celles-ci permettent de coder des informations. Il est également possible de faire varier la longueur des marques, en appliquant une modulation spécifique de la puissance du rayonnement optique appliqué, ladite modulation spécifique de la puissance correspondant à une stratégie d'écriture.

La forme des marques est déterminée par le type des matériaux de la couche photosensible. Ainsi, les matériaux aptes à former des trous, tels que les matériaux à base de tellure allié à de l'antimoine ou à du sélénium, ont été décrits dans un article de M. Terao et al. (« Chalcogenide thin films for laser-beam recordings by thermal creation of holes », J. Appl. Phys. 50(11), Novembre 1979, pages 6881 à 6886).

Cependant, pour atteindre des densités de stockage d'information plus importantes, il est préférable de privilégier les matériaux capables de former des bulles. De tels matériaux ont généralement un point de fusion relativement haut et ils comprennent au moins un élément facile à vaporiser. Dans le cas d'une écriture par formation de bulles, la composition du matériau de la couche photosensible est généralement adaptée de manière à garantir une qualité de formation de bulle compatible avec un bon écart type des longueurs de marques (Jitter) inscrites sur le disque. Il est possible d'utiliser des alliages à base de soufre, de sélénium, de tellure, d'arsenic, de zinc, de cadmium et de phosphore. A titre d'exemple, la couche photosensible peut comprendre un alliage de tellure de zinc (Zn-Te), de séléniure de zinc (ZnSe), de phosphate et de zinc (PZn), d'arsenic et de zinc (AsZn) ou de tellure de cadmium (CdTe). Pour une couche en alliage Zn-Te, la proportion la plus adaptée est de 65% atomique de zinc pour 35% atomique de tellure et l'épaisseur de la couche est de préférence comprise entre 15 et 50nm, et de préférence égale à 40nm.

Selon l'invention, une couche déformable, transparente au rayonnement optique et non biréfringente, est disposée entre la couche photosensible et le second substrat, de sorte qu'elle soit traversée par le rayonnement optique, avant que celui-ci n'atteigne la couche photosensible. La couche déformable a, de préférence, une dureté Shore A comprise entre 20 et 80 et une épaisseur inférieure ou égale à 200*µ*m, et plus particulièrement comprise entre 2*µ*m et 100*µ*m. Elle comporte, de préférence, un polymère préalablement réticulé par un rayonnement lumineux, tel que les polymères choisis parmi les silicones. Plus particulièrement, le polymère peut être du polydiméthysiloxane (PDMS) et la viscosité du polymère est, de préférence, inférieure à 6000mPa.S avant réticulation. La couche déformable peut également être "bi-composant », c'est-à-dire comporter des composants qui polymérisent lorsqu'ils sont mélangés, par exemple le Sylgard 184® ou le Loctite 5091®. La couche déformable est une couche apte à suivre les déformations de la couche photosensible lors des opérations d'écriture sur la couche photosensible. Le rayonnement optique d'écriture traverse à la fois la couche déformable et au moins une partie de la couche photosensible, ce qui permet de créer des déformations dans la couche déformable s'ajoutant aux reliefs crées dans la couche photosensible.

Les premier et second substrats sont, de préférence, en matière plastique, par exemple en polycarbonate (PC) ou en polyméthylméthacrylate (PMMA) et ils sont réalisés par moulage. Le premier substrat comporte une face arrière libre et une face avant qui est, de préférence, structurée. Ainsi, la face avant comporte un sillon, de préférence en forme de spirale et permettant une écriture et une lecture précise des données grâce à un système d'asservissement de focalisation et de suivi de piste. La structuration de la face avant du premier substrat permet également un suivi de piste, le relief de la face avant étant, ainsi, transmis à la couche photosensible et à la couche déformable lors de la réalisation du support. Dans ce cas, le premier substrat comporte des parties en relief sur lesquelles le faisceau laser se focalise. L'épaisseur des substrats ainsi que le pas de la spirale pour le premier substrat sont variables, selon les spécifications imposées par le type de support d'enregistrement souhaité. A titre d'exemple, pour un DVD ou pour un HD-DVD (DVD à haute définition ou en langue anglaise « High Definition-DVD »), le premier substrat a une épaisseur de 0,6mm tandis que pour réaliser un disque optique utilisant un laser bleu, plus connu sous le nom de disque « Blu-Ray », l'épaisseur du premier substrat est de 1,1 mm. De plus, le pas de la spirale du premier substrat est de 0, 74µm pour les DVD et de 0,32µm pour les « Blu-Ray DVD » ou HD-DVD. Conventionnellement, les parties en relief sur le premier substrat ont une largeur maximale égale à la moitié de la période de la spirale.

Le second substrat est non biréfringent et il comporte, de préférence, des faces avant et arrière planes. Son épaisseur est déterminée par le type de format du support souhaité. Ainsi, pour un DVD, la somme des épaisseurs du second substrat et des couches disposées entre les premier et second substrats doit être de l'ordre de 0,6mm, tandis que pour un disque « Blu-Ray DVD », la somme des épaisseurs doit être de l'ordre de 100*µ*m.

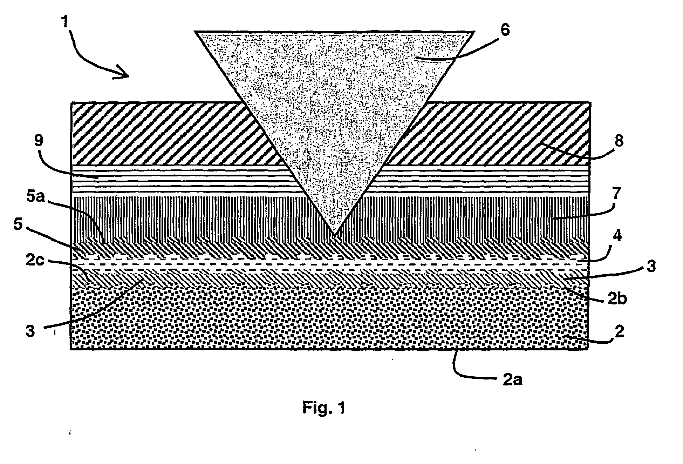

A titre d'exemple, dans un premier mode de réalisation représenté à la figure 1, un support d'enregistrement optique 1 comporte un premier substrat 2 en matière plastique. Le premier substrat 2 comporte une face arrière 2a libre et une face avant 2b structurée. La face avant 2b comporte ainsi des parties en relief 2c destinées à permettre l'écriture et la lecture du support 1 sur des zones disposées au-dessus des parties en relief 2c.

Une couche métallique 3 ayant, de préférence, une épaisseur supérieure ou égale à 15 nanomètres, et plus particulièrement, une épaisseur comprise entre 20 nanomètres et 30 nanomètres, est disposée sur la face avant du premier substrat 2, entre le premier substrat 2 et une couche photosensible 5. La couche métallique 3 destinée à améliorer les propriétés optiques de la couche photosensible 5 est, plus particulièrement adaptée lorsque la couche photosensible 5 est peu absorbante dans une gamme de longueurs d'onde prédéterminée, par exemple lorsque la couche photosensible est constituée par un tellure de zinc et que la gamme de longueurs d'onde du rayonnement optique est comprise entre 630nm et 650nm. La couche métallique 3 permet également d'améliorer le comportement thermique de la couche photosensible 5. Elle peut être constituée par de l'argent, de l'or, de l'aluminium ou du cuivre.

Une couche en matériau diélectrique 4 peut également être disposée entre la couche métallique 3 et la couche photosensible 5. La couche en matériau diélectrique 4 permet également d'améliorer les propriétés optiques de la couche photosensible 5 ainsi que la qualité d'écriture. Elle comprend, de préférence, du sulfure de zinc (ZnS), du sulfure de zinc et de la silice (ZnS-SiO₂), du nitrure de silicium (Si₃N₄) ou du carbure de silicium (SiC) et elle a une faible épaisseur, de préférence inférieure à 20nm.

La couche photosensible 5 en tellure de zinc, destinée à être déformée localement sous l'action d'un rayonnement optique 6 a une épaisseur comprise entre 20nm et 30nm et elle comporte une face avant 5a par laquelle est reçu le rayonnement optique 6. Les deux couches, respectivement métallique et en matériau diélectrique, permettent de former avec la couche photosensible un empilement inorganique capable d'obtenir une forte réflexion initiale tout en conservant une bonne sensibilité d'écriture et un bon contraste. Dans le cas d'un mécanisme d'écriture par formation de trous, les deux couches, respectivement métallique et en matériau diélectrique, peuvent être remplacées par une couche de protection contre l'oxydation, en matériau inorganique. Le matériau inorganique est, de préférence, de l'alumine et la couche a une épaisseur de 7mm.

Une couche déformable 7, en PDMS et ayant une épaisseur inférieure ou égale à 100*µ*m, est disposée sur la face avant 5a de la couche photosensible 5. Dans la mesure où la couche déformable 7 a une adhérence suffisante, elle peut être directement mise en contact avec la face arrière 8a d'un second substrat 8. Sinon, comme représentée à la figure 1, une couche de colle 9 est disposée entre la couche déformable 7 et le seconde substrat 8, de manière à assurer une bonne liaison entre les deux. La couche de colle 9 est, de préférence, déposée à la tournette sur la couche déformable 7 puis elle est solidifiée à l'aide d'un rayonnement lumineux traversant le second substrat 8, une fois celui-ci disposé sur l'ensemble formé par la couche de colle 9, la couche déformable 7, l'empilement inorganique et le premier substrat 2. Pour assembler les premier et second substrats, il est également possible de déposer, par laminage, un film colle de type adhésif de contact également appelé en langue anglaise "Pressure sensitive adhesif" ou PSA, servant de couche de colle 9, sur la face arrière 8a du second substrat 8.

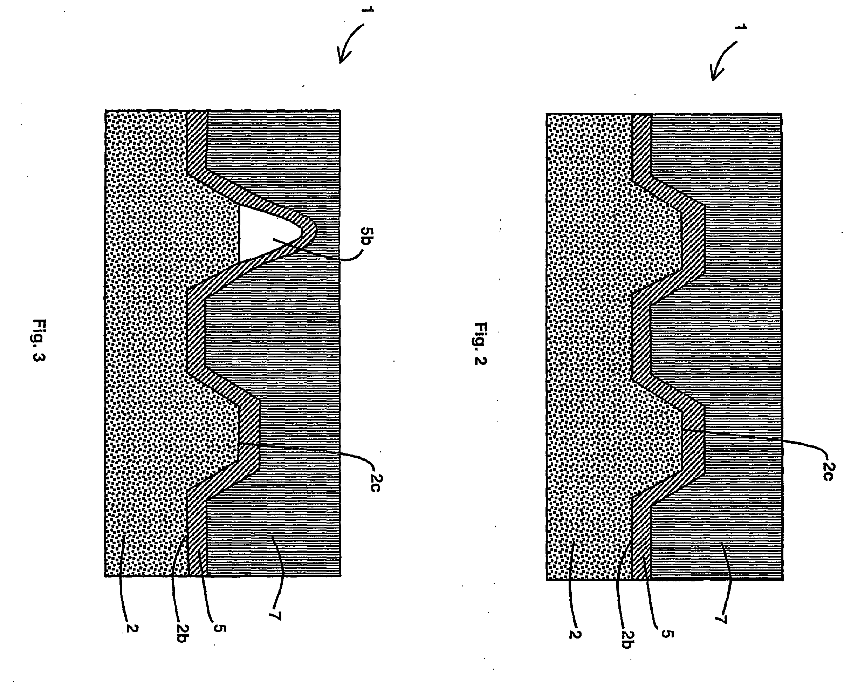

Le fait de disposer une couche déformable 7 sur la face avant de la couche photosensible favorise la création de marques précises dans la couche photosensible 5. En effet, lorsque la couche photosensible 5 se déforme, la couche déformable 7 a une déformation de même type, accompagnant la déformation de la couche photosensible La couche déformable 7 permet, ainsi, de limiter l'élargissement des marques d'écriture du, notamment, à la diffusion de la chaleur du rayonnement optique lors de l'écriture. La couche déformable 7 permet, ainsi, d'obtenir des marques de meilleure qualité. Les figures 2 et 3 illustrent, respectivement avant et après une étape d'écriture, une partie d'un support d'enregistrement 1 comportant un premier substrat 2 avec une face avant 2b structurée sur laquelle sont successivement disposées une couche photosensible 5 et une couche déformable 7. Ainsi, après avoir exposer le support à un rayonnement optique, une bulle 5b se forme dans la couche photosensible 5, au-dessus d'une partie en relief 2c et la couche déformable 7 subit également une déformation, la forme de cette déformation étant complémentaire à celle de la bulle 5b.

Dans une variante de réalisation, une couche métallique ayant, de préférence, une épaisseur inférieure ou égale à 15nm peut être disposée entre la couche photosensible 5 et la couche déformable 7, de manière à améliorer la réflexion de la couche photosensible 5. Elle est, de préférence constituée par de l'or, du cuivre, de l'argent ou de l'aluminium. La couche métallique étant très fine, celle-ci se déforme de la même manière que la couche photosensible 5.Une couche de protection contre l'oxydation, transparente et très fine, peut également être disposée entre ladite couche métallique et la couche déformable 7.

Le tableau I ci-dessous illustre plusieurs exemples de structures de différents supports d'enregistrements selon l'invention.

**Tableau I**

| **Type de support** | **Premier substrat** | **1**^{**ère**} **Couche en matériau inorganique** | **2**^{**ème**} **Couche en matériau inorganique** | **Couche déformable** | **Colle** | **Second substrat** |
|---|---|---|---|---|---|---|
| DVD R | PC | ZnTe | - | PDMS bi | | PC |
| | | | | composant | | |
| 4,7 Go | 0,6mm | | | 20 µm | | 0,58mm |
| DVD R | PC | ZnTe | | PDMS bi | Colle | PC |
| 4,7 Go | 0,6mm | | | composant 20 *µ*m | acrylique réticulable | 0,58mm |
| Blu-Ray R | PC | ZnTe | | PDMS bi | PC (80 *µ*m) avec un film de PDMS de 20 *µ*m réticulable | |
| 25 Go | 1,1 mm | | | composant 100 *µ*m | | |
| Blu-Ray R | PC | ZnTe | | PDMS bi | | |
| 25 Go | 1,1 mm | | | composant 100 *µ*m | | |
| Blu-Ray R | PC | ZnTe | | | PC (80 *µ*m) avec un film de PDMS (20*µ*m) réticulable | |
| 25 Go | 1,1 mm | | | | | |
| Blu-Ray R | PC | ZnTe | | | PC 80 *µ*m | |
| 25 Go | 1,1mm | | | | | |
| DVD R | PC | ZnTe | Métal très fin | PDMS Bi | | PC |
| 4,7 Go | 0,6mm | | | composant | | |
| | | | | 20 *µ*m | | 0,58mm |
| DVD R | PC | ZnTe | Métal très fin | PDMS Bi | Colle | PC |
| 4,7 Go | 0,6mm | | | composant | acrylique | |
| | | | | 20 *µ*m | réticulable | 0,58mm |
| Blu-Ray | PC | ZnTe | Métal très fin | PDMS Bi | PC (60*µ*m) avec un film de colle PSA (20 µm) | |
| 25 Go | 1,1mm | | | composant 20 *µ*m | | |
| Blu-Ray | PC | ZnTe | Métal très fin | PDMS Bi | | |
| 25 Go | 1,1mm | | | composant 100 *µ*m | | |
| Blu-Ray R | PC | ZnTe | Métal très fin | | PC (80 *µ*m) avec une couche en PDMS (20*µ*m) | |
| 25Go | 1,1 mm | | | | | |
| Blu-Ray R | PC | ZnTe | Métal très fin | PDMS Bi | PC (80 *µ*m) | |
| 25Go | 1,1 mm | | | composant 20 *µ*m | | |
| DVD R | PC | Métal épais | ZnTe | PDMS Bi | | PC |
| 4,7Go | 0,6mm | | | composant 20 *µ*m | | 0,58 mm |
| DVD R | PC | Métal épais | ZnTe | PDMS Bi | Colle | PC |
| 4,7Go | 0,6mm | | | composant 20 *µ*m | acrylique réticulable | 0,58mm |
| Blu-Ray R | PC | Métal épais | ZnTe | PDMS Bi | PC (60*µ*m) avec un film de colle PSA (20 *µ*m) | |
| 25Go | 1,1mm | | | composant 20 *µ*m | | |
| Blu-Ray R | PC | Métal épais | ZnTe | PDMS Bi | | |
| 25Go | 1,1 mm | | | composant 100 µm | | |
| Blu-Ray R | PC | Métal épais | ZnTe | | PC (80*µ*m) avec une couche en PDMS (20*µ*m) | |
| 25Go | 1,1mm | | | | | |
| Blu-Ray R | PC | Métal épais | ZnTe | PDMS Bi | PC(80*µ*m) | |
| 25Go | 1,1 mm | | | composant 20 µm | | |

Un support d'enregistrement ayant une structure telle que celles décrites dans le tableau ci-dessus présente l'avantage d'être facile et peu coûteux à mettre en oeuvre et de permettre une capacité de stockage d'information élevée. De plus, il permet de réaliser un premier substrat comportant une spirale ayant une profondeur comprise entre 30nm et 70nm au lieu de 180nm pour un support comportant des matériaux colorants. Cette faible profondeur facilite le pressage du substrat et permet des temps de cycles de fabrication plus courts.

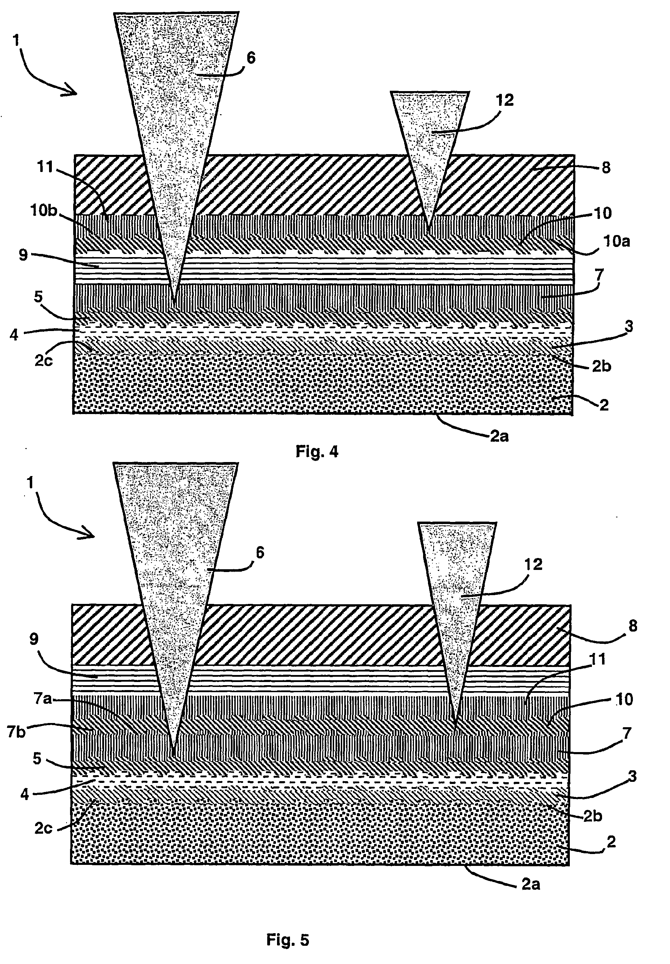

Dans une variante de réalisation représentée aux figures 4 et 5, le support d'enregistrement optique 1 comporte des premier et second substrats 1 et 8 entre lesquels sont disposés un empilement en matériaux inorganiques et une première couche déformable 7, tel que représenté à la figure 1. Ainsi, le premier empilement en matériaux inorganiques comporte successivement une couche métallique 3, une couche en matériau diélectrique 4 et une première couche photosensible 5. De manière à augmenter la capacité de stockage d'information, le support 1 comporte, également, une seconde couche photosensible 10, en matériau inorganique, semi-transparente, sur laquelle est disposée une seconde couche déformable 11 transparente. La seconde couche photosensible 10 est disposée entre la première couche déformable 7 et le second substrat 8 et la seconde couche déformable 11 est disposée entre la seconde couche photosensible 10 et le second substrat 8.

A la figure 4, le support 1 est réalisé en assemblant les premier et second substrats 2 et 8, lesquels comportant respectivement au moins une couche photosensible et une couche déformable. L'assemblage est réalisé par l'intermédiaire d'une couche de colle 9 déposée entre la première couche déformable 7 et la seconde couche photosensible 10. De la même manière que le premier substrat 2, la seconde couche photosensible 10 comporte une face avant 10a structurée, c'est-à-dire que la face avant 10a comporte des parties en relief 10b destinées à focaliser un second rayonnement optique 12. Il est, alors, possible d'écrire et de lire le support d'enregistrement optique sur deux niveaux correspondant aux première et seconde couches photosensibles. Ceci permet de doubler sensiblement la capacité d'enregistrement du support. Ainsi, dans le cas d'un support de type DVD, il est possible d'obtenir une capacité de 8,5Go à la place de 4,7Go.

A la figure 5, le premier substrat supporte préalablement l'empilement de matériaux, de préférence inorganiques, la première couche déformable 7, la seconde couche photosensible 10 et la seconde couche déformable 11. Le second substrat 8 est alors fixé à l'ensemble par l'intermédiaire d'une couche de colle 9 disposée entre la seconde couche déformable et le second substrat 8. Dans ce cas, la face avant de la seconde couche photosensible 10 est plane tandis que la première couche déformable 7 comporte une face avant 7a structurée. Ainsi, la face avant 7a de la couche déformable comporte des parties en relief 7b destinées à focaliser le second rayonnement optique 12.

Dans une variante de réalisation, une couche en polymère, plus dure que les couches déformables est étalée à la tournette puis réticulée sur la première couche déformable 7. Dans ce cas, la face avant de la première couche déformable 7 est plane et la couche en polymère plus dure comporte une face avant structurée. Une telle couche permet de maîtriser l'orientation des déformations des couches photosensibles lors de l'écriture.

L'invention n'est pas limitée aux modes de réalisation décrits ci-dessus. Ainsi, le premier substrat peut être absorbant. Il peut donc être coloré en surface ou en volume. De plus, les figures 1 à 5 étant des représentations schématiques de modes particuliers de réalisation, pour des raisons de clarté, les épaisseurs des différentes couches représentées aux figures 1 à 5 ne sont pas proportionnelles.

## Revendications

1. Support d'enregistrement optique comportant des premier et second substrats (2, 8) entre lesquels est disposée au moins une première couche photosensible (5) comportant une face avant (5a) destinée à recevoir, par l'intermédiaire du second substrat (8), un rayonnement optique (6) pendant des opérations d'écriture et/ou de lecture, support **caractérisé en ce qu'**une première couche déformable (7), transparente au rayonnement optique (6), est disposée entre la première couche photosensible (5) et le second substrat (8).

2. Support selon la revendication 1, **caractérisé en ce que** la première couche photosensible (5) comprend un matériau inorganique.

3. Support selon l'une des revendications 1 et 2, **caractérisé en ce que** le premier substrat (2) comporte une face avant (2b) structurée.

4. Support selon l'une quelconque des revendications 1 à 3, **caractérisé en ce que** la première couche déformable (7) comprend un polymère préalablement réticulé par un rayonnement lumineux.

5. Support selon la revendication 3, **caractérisé en ce que** le polymère est choisi parmi les silicones.

6. Support selon l'une quelconque des revendications 1 à 4, **caractérisé en ce que** la première couche déformable (7) a une épaisseur inférieure ou égale à 200 micromètres.

7. Support selon l'une quelconque des revendications 1 à 5, **caractérisé en ce que** le support (1) comporte une couche diélectrique (4) disposée entre le premier substrat (2) et la première couche photosensible (5).

8. Support selon l'une quelconque des revendications 1 à 7, **caractérisé en ce que** le support (1) comporte une première couche métallique (3) disposée entre le premier substrat (2) et la première couche photosensible (5).

9. Support selon l'une quelconque des revendications 1 à 8, **caractérisé en ce que** le support (1) comporte une couche de protection contre l'oxydation disposée entre le premier substrat (2) et la première couche photosensible (5).

10. Support selon l'une quelconque des revendications 1 à 9, **caractérisé en ce que** le support (1) comporte une seconde couche métallique disposée entre la première couche photosensible (5) et la première couche déformable (7).

11. Support selon la revendication 10, **caractérisé en ce qu'**une couche de protection contre l'oxydation, transparente au rayonnement optique, est disposée entre la seconde couche métallique et la première couche déformable (7).

12. Support selon l'une quelconque des revendications 1 à 11, **caractérisé en ce que** le support (1) comporte au moins une seconde couche photosensible (10) semi-transparente, disposée entre la première couche déformable (7) et le second substrat (8), une seconde couche déformable (11) étant disposée entre la seconde couche photosensible (10) et le second substrat (8).

13. Support selon la revendication 12, **caractérisé en ce que** la seconde couche photosensible (10) comprend un matériau inorganique.

14. Support selon l'une des revendications 12 et 13, **caractérisé en ce que** la seconde couche photosensible (10) comporte une face avant (10a) structurée.

15. Support selon l'une des revendications 12 et 13, **caractérisé en ce que** la première couche déformable (7) comporte une face avant (7a) structurée.

16. Support selon l'une quelconque des revendications 1 à 15, **caractérisé en ce que** le support (1) est sous la forme d'un disque optique.

17. Support selon l'une quelconque des revendications 1 à 15, **caractérisé en ce que** le support (1) est sous la forme d'une carte à puce.

## Claims

1. Optical recording medium comprising first and second substrates (2, 8) wherebetween there is arranged at least one first photosensitive layer (5) comprising a front face (5a) for receiving optical radiation (6), by means of the second substrate (8), during writing and/or reading operations, medium **characterized in that** a first deformable layer (7), transparent to the optical radiation (6), is arranged between the first photosensitive layer (5) and the second substrate (8).

2. Medium according to claim 1, **characterized in that** the first photosensitive layer (5) comprises an inorganic material.

3. Medium according to one of the claims 1 and 2, **characterized in that** the first substrate (2) comprises a patterned front face (2b).

4. Medium according to any one of the claims 1 to 3, **characterized in that** the first deformable layer (7) comprises a polymer previously cross-linked by a light radiation.

5. Medium according to claim 3, **characterized in that** the polymer is chosen among silicones.

6. Medium according to any one of the claims 1 to 4, **characterized in that** the first deformable layer (7) has a thickness less than or equal to 200 micrometers.

7. Medium according to any one of the claims 1 to 5, **characterized in that** the medium (1) comprises a dielectric layer (4) arranged between the first substrate (2) and the first photosensitive layer (5).

8. Medium according to any one of the claims 1 to 7, **characterized in that** the medium (1) comprises a first metal layer (3) arranged between the first substrate (2) and the first photosensitive layer (5).

9. Medium according to any one of the claims 1 to 8, **characterized in that** the medium (1) comprises a layer protecting against oxidation arranged between the first substrate (2) and the first photosensitive layer (5).

10. Medium according to any one of the claims 1 to 9, **characterized in that** the medium (1) comprises a second metal layer arranged between the first photosensitive layer (5) and the first deformable layer (7).

11. Medium according to claim 10, **characterized in that** a layer protecting against oxidation, transparent to the optical radiation, is arranged between the second metal layer and the first deformable layer (7).

12. Medium according to any one of the claims 1 to 11, **characterized in that** the medium (1) comprises at least one semi-transparent second photosensitive layer (10), arranged between the first deformable layer (7) and the second substrate (8), a second deformable layer (11) being arranged between the second photosensitive layer (10) and the second substrate (8).

13. Medium according to claim 12, **characterized in that** the second photosensitive layer (10) comprises an inorganic material.

14. Medium according to one of the claims 12 and 13, **characterized in that** the second photosensitive layer (10) comprises a patterned front face (10a).

15. Medium according to one of the claims 12 and 13, **characterized in that** the first deformable layer (7) comprises a patterned front face (7a).

16. Medium according to any one of the claims 1 to 15, **characterized in that** the medium (1) is in the form of an optical disc.

17. Medium according to any one of the claims 1 to 15, **characterized in that** the medium (1) is in the form of a chip card.

## Patentansprüche

1. Optisches Aufzeichnungsmedium mit einem ersten und einem zweiten Substrat (2, 8), zwischen denen mindestens eine erste lichtempfindliche Schicht (5) angeordnet ist, die eine Vorderseite (5a) aufweist, die dazu bestimmt ist, während Schreib- und/oder Lesevorgängen mittels des zweiten Substrats (8) eine optische Strahlung (6) zu empfangen, Medium **dadurch gekennzeichnet, dass** eine erste verformbare Schicht (7), die für die optische Strahlung (6) durchlässig ist, zwischen der ersten lichtempfindlichen Schicht (5) und dem zweiten Substrat (8) angeordnet ist.

2. Medium nach Anspruch 1, **dadurch gekennzeichnet, dass** die erste lichtempfindliche Schicht (5) ein anorganisches Material umfasst.

3. Medium nach einem der Ansprüche 1 und 2, **dadurch gekennzeichnet, dass** das erste Substrat (2) eine strukturierte Vorderseite (2b) aufweist.

4. Medium nach einem der Ansprüche 1 bis 3, **dadurch gekennzeichnet, dass** die erste verformbare Schicht (7) ein vorab durch Lichtstrahlung vernetztes Polymer umfasst.

5. Medium nach Anspruch 3, **dadurch gekennzeichnet, dass** das Polymer aus der Gruppe der Silikone ausgewählt ist.

6. Medium nach einem der Ansprüche 1 bis 4, **dadurch gekennzeichnet, dass** die erste verformbare Schicht (7) eine Dicke von 200 Mikrometern oder darunter aufweist.

7. Medium nach einem der Ansprüche 1 bis 5, **dadurch gekennzeichnet, dass** das Medium (1) eine dielektrische Schicht (4) aufweist, die zwischen dem ersten Substrat (2) und der ersten lichtempfindlichen Schicht (5) angeordnet ist.

8. Medium nach einem der Ansprüche 1 bis 7, **dadurch gekennzeichnet, dass** das Medium (1) eine erste metallische Schicht (3) aufweist, die zwischen dem ersten Substrat (2) und der ersten lichtempfindlichen Schicht (5) angeordnet ist.

9. Medium nach einem der Ansprüche 1 bis 8, **dadurch gekennzeichnet, dass** das Medium (1) eine Schutzschicht gegen Oxidation aufweist, die zwischen dem ersten Substrat (2) und der ersten lichtempfindlichen Schicht (5) angeordnet ist.

10. Medium nach einem der Ansprüche 1 bis 9, **dadurch gekennzeichnet, dass** das Medium (1) eine zweite metallische Schicht (3) aufweist, die zwischen der ersten lichtempfindlichen Schicht (5) und der ersten verformbaren Schicht (7) angeordnet ist.

11. Medium nach Anspruch 10, **dadurch gekennzeichnet, dass** zwischen der zweiten metallischen Schicht und der ersten verformbaren Schicht (7) eine für die optische Strahlung durchlässige Schutzschicht gegen Oxidation angeordnet ist.

12. Medium nach einem der Ansprüche 1 bis 11, **dadurch gekennzeichnet, dass** das Medium (1) mindestens eine zweite, halbtransparente lichtempfindliche Schicht (10) aufweist, die zwischen der ersten verformbaren Schicht (7) und dem zweiten Substrat (8) angeordnet ist, wobei eine zweite verformbare Schicht (11) zwischen der zweiten lichtempfindlichen Schicht (10) und dem zweiten Substrat (8) angeordnet ist.

13. Medium nach Anspruch 12, **dadurch gekennzeichnet, dass** die zweite lichtempfindliche Schicht (10) ein anorganisches Material umfasst.

14. Medium nach einem der Ansprüche 12 und 13, **dadurch gekennzeichnet, dass** die zweite lichtempfindliche Schicht (10) eine strukturierte Vorderseite (10a) umfasst.

15. Medium nach einem der Ansprüche 12 und 13, **dadurch gekennzeichnet, dass** die erste verformbare Schicht (7) eine strukturierte Vorderseite (7a) umfasst.

16. Medium nach einem der Ansprüche 1 bis 15, **dadurch gekennzeichnet, dass** das Medium (1) in Form einer optischen Speicherplatte vorliegt.

17. Medium nach einem der Ansprüche 1 bis 15, **dadurch gekennzeichnet, dass** das Medium (1) in Form einer Chipkarte vorliegt.
